# EUROPEAN PATENT APPLICATION

(11) **EP 3 716 388 A2**
(43) Date of publication of application: **30.09.2020**
(21) Application number: 20161410.4
(22) Date of filing: 06.03.2020
(51) Int. Cl.: H01M 10/052, H01M 10/0525, H01M 10/056, H01M 10/0565, H01M 10/0566

(54) **POLYAMIDES, POLYUREAS AND POLYPHOSPHORAMIDES AS ANOLYTES FOR LITHIUM BATTERIES**

(30) Priority: 08.03.2019 US 201916297463
(71) Applicant: Robert Bosch GmbH, 70442 Stuttgart (DE)
(72) Inventor: BHEEMIREDDY, Sambasiva R., Fremont, CA California 94536 (US); EITOUNI, Hany Basam, Oakland, CA California 94618 (US)
(74) Representative: Isarpatent

(57) **Abstract**

New polyamide-based, polyurea-based and polyphosphoramide-based polymers have been synthesized. When these polymers are combined with electrolyte salts, such polymer electrolytes have excellent electrochemical stability as anolytes in lithium battery cells.

## Description

### BACKGROUND OF THE INVENTION

### Field of the Invention

This invention relates generally to electrolytes for lithium batteries, and, more specifically, to electrolytes that are especially suited for use with anodes.

Efforts are being made to boost performance of lithium battery cells by looking at all components in such cells and finding ways to improve properties and stave off degradation.

Polymer electrolytes are of great interest in lithium battery cells due to their superior mechanical properties, flexibility, and safety features as compared to their small molecule counterparts. However, such materials may undergo degradation over time under cell operating conditions, especially in low potential regions of the cell.

Thus, it would be especially useful to develop electrolytes that are especially stable in low potential regions of lithium battery cells.

### SUMMARY

In one embodiment of the invention, a polymer with the following structure is disclosed. 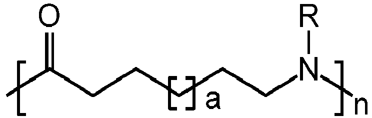 Each R may be selected independently from any of alkyl and/or aryl substituents; and a and n are integers, wherein a ranges from 1 to 10, and n ranges from 1 to 1000. In some embodiments of the invention, the polymer also contains an electrolyte salt, and the polymer is an electrolyte. In some arrangements, the electrolyte also contains ceramic electrolyte particles. In some arrangements, the polymer is crosslinked and may or may not also contain an electrolyte salt.

In one embodiment of the invention, a polymer with the following structure is disclosed. 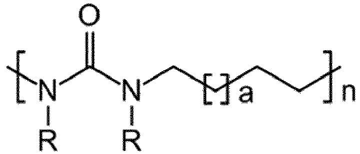 Each R may be selected independently from any of alkyl and/or aryl substituents; and a and n are integers, wherein a ranges from 1 to 10, and n ranges from 1 to 1000. In some embodiments of the invention, the polymer also contains an electrolyte salt, and the polymer is an electrolyte. In some arrangements, the electrolyte also contains ceramic electrolyte particles. In some arrangements, the polymer is crosslinked and may or may not also contain an electrolyte salt.

In one embodiment of the invention, a polymer with the following structure is disclosed. 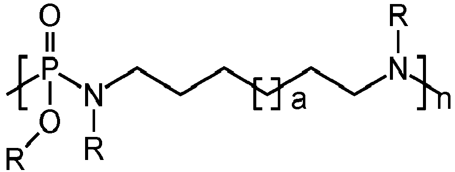 Each R may be selected independently from any of alkyl and/or aryl substituents; and a and n are integers, wherein a ranges from 1 to 10, and n ranges from 1 to 1000. In some embodiments of the invention, the polymer also contains an electrolyte salt, and the polymer is an electrolyte. In some arrangements, the electrolyte also contains ceramic electrolyte particles. In some arrangements, the polymer is crosslinked and may or may not also contain an electrolyte salt.

In one embodiment of the invention, a polymer with the following structure is disclosed. 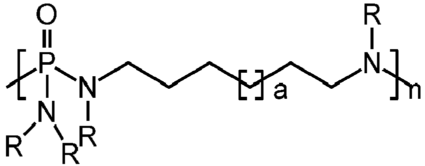 Each R may be selected independently from any of alkyl and/or aryl substituents; and a and n are integers, wherein a ranges from 1 to 10, and n ranges from 1 to 1000. In some embodiments of the invention, the polymer also contains an electrolyte salt, and the polymer is an electrolyte. In some arrangements, the electrolyte also contains ceramic electrolyte particles. In some arrangements, the polymer is crosslinked and may or may not also contain an electrolyte salt.

In one embodiment of the invention, an electrochemical cell is disclosed. The electrochemical cell includes at least an anode configured to absorb and release lithium ions; a cathode comprising cathode active material particles, an electronically-conductive additive, and a catholyte; a current collector adjacent to an outside surface of the cathode; and a separator region between the anode and the cathode, the separator region comprising any of the polymer electrolytes disclosed herein, *i.e*., any of the polymers disclosed herein and an electrolyte salt such as a lithium salt.

In some arrangements, the separator region in the electrochemical cell has at least two layers: an anolyte layer adjacent to the anode, the anolyte layer comprising an anolyte, and a separator electrolyte layer positioned between the anolyte layer and the cathode, the separator electrolyte layer comprising a separator electrolyte. The anolyte may include any of the polymers disclosed herein and an electrolyte salt such as a lithium salt. In some arrangements, the separator electrolyte contains a solid polymer electrolyte suitable for use in a lithium electrochemical cell. In some arrangements, at least one of the anolyte and the separator electrolyte further comprises ceramic electrolyte particles. In some arrangements, at least one of the anolyte and the separator electrolyte is crosslinked. In some arrangements, the anode contains a solid metal film made of a material such as lithium metal and/or lithium alloys. In some arrangements, the anode contains anode active material particles such as lithium titanate, graphite, silicon, and combinations thereof, in which case, the anode may also contain any of the polymer electrolytes disclosed herein.

### BRIEF DESCRIPTION OF THE DRAWINGS

The foregoing aspects and others will be readily appreciated by the skilled artisan from the following description of illustrative embodiments when read in conjunction with the accompanying drawings.
Figure 1 is a graph that shows differential pulse voltammetry data for model compound dimethylacetamide, according to an embodiment of the invention.
Figure 2 is a graph that shows differential pulse voltammetry data for model compound N,N'-dimethylpropyleneurea, according to an embodiment of the invention.
Figure 3 is a graph that shows differential pulse voltammetry data for model compound hexamethylphosphoramide, according to an embodiment of the invention.
Figure 4 is a schematic illustration of one configuration of a lithium battery cell, according to an embodiment of the invention.
Figure 5 is a schematic illustration of another configuration of a lithium battery cell, according to an embodiment of the invention.

### DETAILED DESCRIPTION

The embodiments of the invention are illustrated in the context of polymers that can be used as electrolytes or electrolyte additives in lithium battery cells and the like. The skilled artisan will readily appreciate, however, that the materials and methods disclosed herein will have application in a number of other contexts where low-potential electrolytes are desirable, particularly where long-term stability is important.

These and other objects and advantages of the present invention will become more fully apparent from the following description taken in conjunction with the accompanying drawings.

All publications referred to herein are incorporated by reference in their entirety for all purposes as if fully set forth herein.

In this disclosure, the terms "negative electrode" and "anode" are both used to describe a negative electrode. Likewise, the terms "positive electrode" and "cathode" are both used to describe a positive electrode. The term "anolyte" is used to describe any electrolyte that is within or adjacent to an anode. The term "catholyte" is used to describe any electrolyte that is within or adjacent to a cathode.

It is to be understood that the terms "lithium metal" or "lithium foil," as used herein with respect to negative electrodes, describe both pure lithium metal and lithium-rich metal alloys as are known in the art. Examples of lithium rich metal alloys suitable for use as anodes include Li-Al, Li-Si, Li-Sn, Li-Hg, Li-Zn, Li-Pb, Li-C or any other Li-metal alloy suitable for use in lithium metal batteries. Other negative electrode materials that can be used in the embodiments of the invention include particulate materials into which lithium can intercalate, such as graphite, and other materials that can absorb and release lithium ions, such as silicon, germanium, tin, and alloys thereof. Such anodes include anolytes and optional binder in addition to the particulate negative electrode materials. Many embodiments described herein are directed to batteries with solid polymer electrolytes, which serve the functions of both electrolyte and separator. As it is well known in the art, batteries with liquid electrolytes use an inactive separator material that is distinct from the liquid electrolyte.

The following construction is used throughout this disclosure: "each variable is chosen independently" from a list that is provided. An example of this usage can be found with reference to X groups in some of the inventive polymer structures in which there are many Xs. The example is, "each X may be chosen independently from hydrogen, fluorine, methyl, ethyl, isopropyl, and trifluoromethyl groups." This construction is used to mean that for a particular X in the structure, any of the groups in the list may be used. In choosing a group to use for another X in the structure, any of the groups in the list may be used with no regard to the choices that have been made for other X groups. Thus, the following arrangements are all possible: all the Xs may be the same, all the Xs may be different, or some Xs may be the same and some may be different.

The molecular weights given herein are number-averaged molecular weights.

The term "solid polymer electrolyte" is used herein to mean a polymer electrolyte that is solid at battery cell operating temperatures. Examples of useful battery cell operating temperatures include room temperature (25°C), 40°C, and 80°C.

In this disclosure, ranges of values are given for many variables. It should be understood that the possible values for any variable also include any range subsumed within the given range.

### Polyamide, Polyurea and Polyphosphoramide Polymers

In various embodiments of the invention, polyamide-based, polyurea-based and polyphosphoramide-based polymers are disclosed. Such polymers can be mixed with lithium salts and used as anolytes in a lithium battery. Such polymer electrolytes have increased anode stability as compared to conventional polymer electrolytes.

In some embodiments of the invention, the general structure of a polyamide-based polymer is shown below:

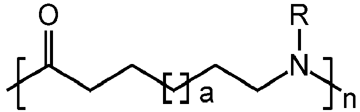

in which each R is independent of the other Rs and may be alkyl and/or aryl substituents. Both a and n are integers. The value of a ranges from 1 to 10. The value of n ranges from 1 to 1000.

In some embodiments of the invention, the general structure of a polyurea-based polymer is shown below:

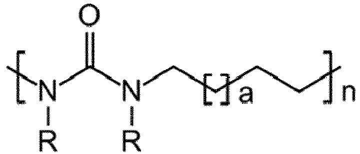

in which each R is independent of the other Rs and may be alkyl and/or aryl substituents. Both a and n are integers. The value of a ranges from 1 to 10. The value of n ranges from 1 to 1000.

In some embodiments of the invention, the general structures of phosphate-based polymers are shown below:

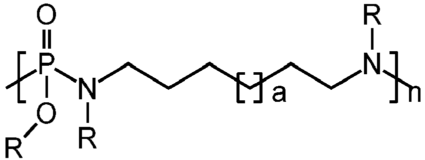

in which each R is independent of the other Rs and may be alkyl and/or aryl substituents. Both a and n are integers. The value of a ranges from 1 to 10. The value of n ranges from 1 to 1000.

In some embodiments of the invention, the general structures of polyphosphoramide-based polymers are shown below:

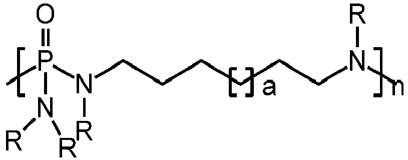

in which each R is independent of the other Rs and may be alkyl and/or aryl substituents. Both a and n are integers. The value of a ranges from 1 to 10. The value of n ranges from 1 to 1000.

In some embodiments of the invention, particles of ceramic electrolyte are mixed into any of the polymer electrolytes disclosed herein to form an enhanced composite electrolyte with superior ionic transport and mechanical properties. Such a composite electrolyte may be used as an anolyte in a lithium battery cell. Examples of ceramic electrolytes that are useful for mixing with polymer electrolytes include, but are not limited to, those shown in Table 1 below.

**Table 1**

| **Exemplary Ceramic Conductors for Use as Additives in Polyamide-Based, Polyurea-Based and Polyphosphoramide-Based Polymer Electrolytes** | | |
|---|---|---|
| **Electrolyte Type** | **Exemplary Formulas** | **Mixture Proportion** |
| Oxynitride glass | LiₓPO_{y}N_{z} x=2.9, y=3.3, z=0.46 0.24<z<1.2 | |
| | LiₓBO_{y}N_{z} | |
| Sulfide and oxysulfide glass | Li₂S • P₂S₅ | 0.75 : 0.25 |
| | Li₂S • SiS₂ | 0.6 : 0.4 |
| | Li₂S • SiS₂ • LiₓMO₄ M=Si, P, Ge | 0.57 : 0.38 : 0.05 |
| | Li₂S • SiS₂ • Li₃PO₄ | 0.63 : 0.36 : 0.01 |
| | Li₂S • SiS₂ • xMS_{y} M=Sn, Ta, Ti | 0.6 : 0.4 : 0.01-0.05 |
| | Li₂S • SiS₂ • Li₃N | 0.55 : 0.40 : 0.03 |
| Li thionitride glass | Li₃N • SiS₂ | 0.4 : 0.6 |
| LLTO Perovskite structure (Ohara type) | La_{2/3-x}Li₃ₓTiO₃ 0.03≤x≤0.167 | |
| | La_{1/3-x}Li₃ₓTaO₃ 0.025≤x≤0.167 | |
| | La_{1/3-x}Li₃ₓNbO₃ 0≤x≤0.06 | |
| Nasicon-type (Lisicon) phosphate | Li_{1.3}Ti_{1.7}Al_{0.3}(PO₄)₃ | |
| | LiAlTa(PO₄)₃ | |
| | LiAl_{0.4}Ge_{1.6}(PO₄)₃ | |
| | Li_{1.4}Ti_{1.6}Y_{0.4}(PO₄)₃ | |
| | Li₃₋₂ₓ(SC₁₋ₓMₓ)₂(PO₄)₃ M=Zr, Ti, x=0.1, 0.2 | |
| | Li₃Sc_{1.5}Fe_{0.5}(PO₄)₃ | |

| | | |
|---|---|---|
| • denotes that components are mixed together | | |

Table 2 below shows lithium ion transport properties for various polymer anolyte materials. These polymers show promising lithium ion transport properties.

**Table 2**

| **Comparison of Lithium Transport Properties for Polyamide-Based, Polyurea-Based and Polyphosphoramide-Based Polymer Electrolytes** | | | |
|---|---|---|---|
| **Compound No.** | **Material** | **Chemical Structure** | **Conductivity* (10⁻⁵.S/cm)** |
| 1 | N-methylpolycaprolactam | 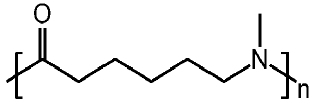 | 0.8 |
| 2 | poly butyl N,N-dimethylurea | 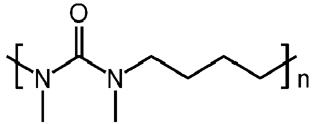 | 1.1 |
| 3 | poly hexyl methyl-N,N'-dimethyldiamidophosphate. | 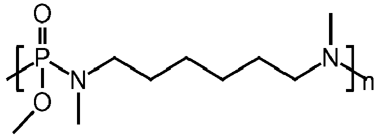 | 0.008 |
| 4 | poly hexyl tetramethylphosphoramide | 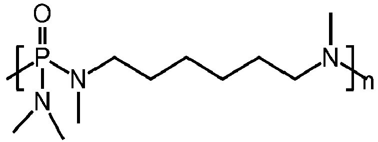 | 1.7 |

| | | | |
|---|---|---|---|
| *Conductivity measured at 80° with 30 wt% LiTFSi in polymer. | | | |

### Electrochemical Stability

The high reductive stability of some of the polymer electrolytes disclosed herein was approximated by differential pulse voltammetry (DPV) using their respective small molecules as model systems. Model small molecules for poly butyl N,N-dimethylurea (compound 1), poly hexyl methyl-N,N'-dimethyldiamidophosphate (compound 2), and poly hexyl tetramethylphosphoramide (compound 3) are shown below as polyamide (1), polyurea (2), and polyphosphoramide (3), respectively.

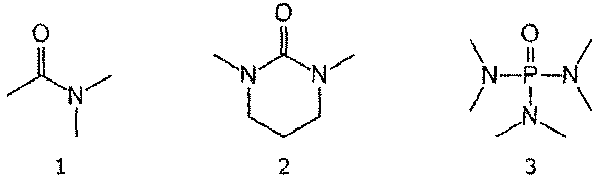

The DPV was measured using a three-electrode system that included a Pt button electrode, a Pt wire counter electrode, and a quasi-reference electrode constructed from an Ag wire dipped in a 10 mM AgNO₃ in 0.1 M tetrabutylammonium hexafluorophosphate solution in a glass tubing with an attached Vycor frit. The quasi-reference electrode was first calibrated against a 10mM ferrocene solution in 0.1 M tetrabutylammonium perchlorate (TBAClO₄) in THF. The DPV was carried out on 0.1 M solutions of poly butyl N,N-dimethylurea (compound 1), poly hexyl methyl-N,N'-dimethyldiamidophosphate (compound 2), and poly hexyl tetramethylphosphoramide (compound 3) in 0.1 M TBAClO₄ in THF at a scan rate of 5 mV/s. The DPV data were then standardized for Li/Li+ to test their reduction stability against lithium, as these electrolyte materials interact with a lithium anode in an actual lithium metal battery cell.

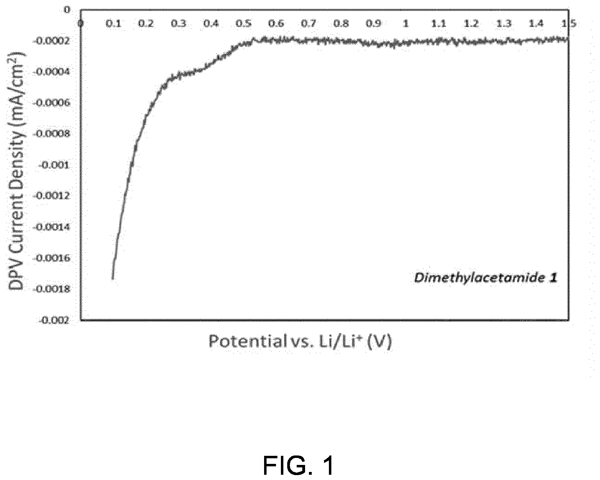

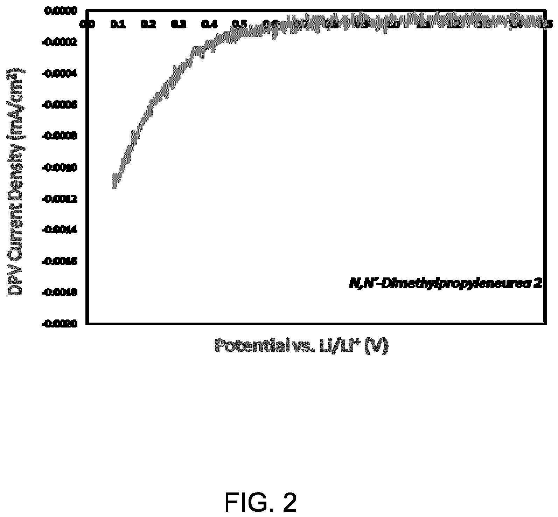

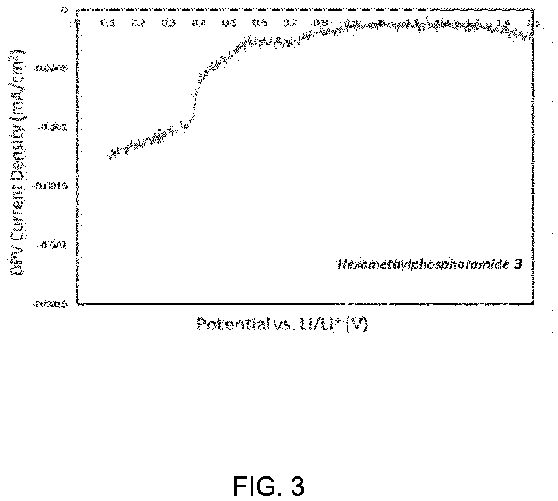

The voltage stability of dimethylacetamide was inferred by measuring the voltage stability of polyamide, and the results are shown in the graph in Figure 1. The voltage stability of N, N'-dimethylpropyleneurea (1) was inferred by measuring the voltage stability of polyurea, and the results are shown in the graph in Figure 2. The voltage stability of hexamethylphosphoramide (2) was inferred by measuring the voltage stability of polyphosphoramide (3), and the results are shown in the graph in Figure 3. As shown in Figures 1, 2, and 3, the three model compounds 1, 2 and 3 showed electrochemical reduction stability of up to 0.4 V. This clearly indicates that these types of amide-based, urea-based and phosphoramide-based structural systems are reductively stable and are highly promising candidates for use as high energy density lithium ion battery anolytes.

### Cell Designs that Include Polyamide-Based, Polyurea-Based and Polyphosphoramide-Based Polymer Electrolytes

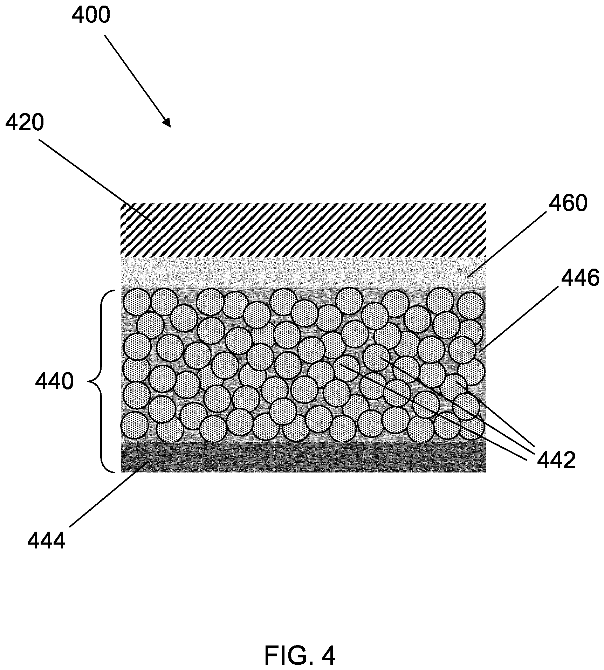

In another embodiment of the invention, a lithium battery cell 400 has an anode 420 that is configured to absorb and release lithium ions as shown in Figure 4. The anode 420 may be a lithium or lithium alloy foil or it may be made of a material into which lithium ions can be absorbed such as graphite or silicon. Other choices for the anode 420 include, but are not limited to, lithium titanate, and lithium-silicon alloys. The lithium battery cell 400 also has a cathode 440 that includes cathode active material particles 442, an electronically-conductive additive such as carbon black (not shown), a current collector 444, a catholyte 446, and an optional binder (not shown). There is a separator electrolyte 460 between the anode 420 and the cathode 440. The separator electrolyte 460 facilitates movement of lithium ions back and forth between the anode 420 and the cathode 440 as the cell 400 cycles. The separator electrolyte 460 may include any of the polyamide-based, polyurea-based and polyphosphoramide-based polymer electrolytes disclosed herein.

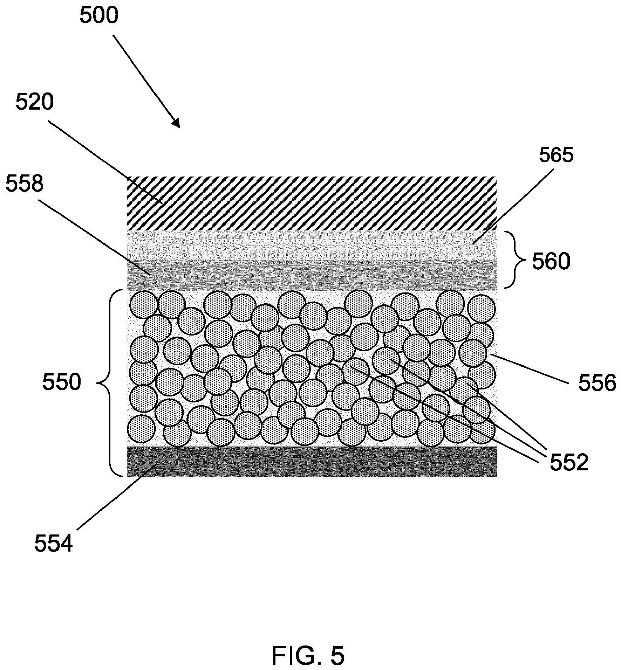

In another embodiment of the invention, a battery cell with a second configuration is described. With reference to Figure 5, a lithium battery cell 500 has an anode 520 that is configured to absorb and release lithium ions. The anode 520 may be a lithium or lithium alloy foil or it may be made of a material into which lithium ions can be absorbed such as graphite or silicon. Other choices for the anode 520 include, but are not limited to, lithium titanate, and lithium-silicon alloys. The lithium battery cell 500 also has a cathode 550 that includes cathode active material particles 552, an electronically-conductive additive (not shown), a current collector 554, a catholyte 556, and an optional binder (not shown). There is a separator region 560 between the anode 520 and the cathode 550. The separator region 560 contains an anolyte 565 and a separator electrolyte 558, which facilitate movement of lithium ions back and forth between the anode 520 and the cathode 550 as the cell 500 cycles. The anolyte 565 may include any of the polyamide-based, polyurea-based and polyphosphoramide-based polymer electrolytes disclosed herein. In some arrangements, the separator electrolyte 560 any electrolyte that is suitable for use in a lithium battery cell. In some arrangements, the separator electrolyte 560 contains a liquid electrolyte that is soaked into a porous plastic material (not shown). In another arrangement, the separator electrolyte 560 contains a viscous liquid or gel electrolyte. In another arrangement, the separator region 560 contains a solid polymer electrolyte in which the anolyte 565 and/or the catholyte 556 are/is immiscible.

A solid polymer electrolyte for use in a separator region, such as separator regions 460 or 560, or as a catholyte, such as catholytes 446 or 556, can be any electrolyte that is appropriate for use in a Li battery. Of course, many such electrolytes also include electrolyte salt(s) that help to provide ionic conductivity. Examples of useful Li salts include, but are not limited to, LiPF₆, LiN(CF₃SO₂)₂ (LiTFSI), Li(CF₃SO₂)₃C, LiN(SO₂CF₂CF₃)₂, LiN(FSO₂)₂, LiN(CN)₂, LiB(CN)₄,LiB(C₂O₄)₂, Li₂B₁₂FₓH₁₂₋ₓ, Li₂B₁₂F₁₂, , and mixtures thereof. Examples of such electrolytes include, but are not limited to, block copolymers that contain ionically-conductive blocks and structural blocks that make up ionically-conductive phases and structural phases, respectively. The ionically-conductive phase may contain one or more linear polymers such as polyethers, polyamines, polyimides, polyamides, poly alkyl carbonates, polynitriles, perfluoro polyethers, fluorocarbon polymers substituted with high dielectric constant groups such as nitriles, carbonates, and sulfones, and combinations thereof. In one arrangement, the ionically-conductive phase contains one or more phosphorous-based polyester electrolytes, as disclosed herein. The linear polymers can also be used in combination as graft copolymers with polysiloxanes, polyalkoxysiloxanes, polyphosphazines, polyolefins, and/or polydienes to form the conductive phase. The structural phase can be made of polymers such as polystyrene, hydrogenated polystyrene, polymethacrylate, poly(methyl methacrylate), polyvinylpyridine, polyvinylcyclohexane, polyimide, polyamide, polypropylene, polyolefins, poly(t-butyl vinyl ether), poly(cyclohexyl methacrylate), poly(cyclohexyl vinyl ether), poly(t-butyl vinyl ether), polyethylene, poly(phenylene oxide), poly(2,6-dimethyl-1,4-phenylene oxide), poly(phenylene sulfide), poly(phenylene sulfide sulfone), poly(phenylene sulfide ketone), poly(phenylene sulfide amide), polysulfone, fluorocarbons, such as polyvinylidene fluoride, or copolymers that contain styrene, methacrylate, or vinylpyridine. It is especially useful if the structural phase is rigid and is in a glassy or crystalline state.

With respect to the embodiments described in Figures 4, and 5, suitable cathode active materials include, but are not limited to, LFP (lithium iron phosphate), LMP (lithium metal phosphate in which the metal can be Mn, Co, or Ni), V₂O₅ (divanadium pentoxide), NCA (lithium nickel cobalt aluminum oxide), NCM (lithium nickel cobalt manganese oxide), high energy NCM (HE-NCM - magnesium-rich lithium nickel cobalt manganese oxide), lithium manganese spinel, lithium nickel manganese spinel, and combinations thereof. Suitable electronically-conductive additives include, but are not limited to, carbon black, graphite, vapor-grown carbon fiber, graphene, carbon nanotubes, and combinations thereof. A binder can be used to hold together the cathode active material particles and the electronically conductive additive. Suitable binders include, but are not limited to, PVDF (polyvinylidene difluoride), PVDF-HFP poly (vinylidene fluoride-co-hexafluoropropylene), PAN (polyacrylonitrile), PAA (polyacrylic acid), PEO (polyethylene oxide), CMC (carboxymethyl cellulose), and SBR (styrene-butadiene rubber).

Any of the polymers described herein may be liquid or solid, depending on its molecular weight. Any of the polyamide-based, polyurea-based and polyphosphoramide-based polymers described herein can be combined with an electrolyte salt to be used as an electrolyte. Any of the polyamide-based, polyurea-based and polyphosphoramide-based polymers or polymer electrolytes described herein may be in a crosslinked or an uncrosslinked state. Any of the polyamide-based, polyurea-based and polyphosphoramide-based polymers or polymer electrolytes described herein may be crystalline or glassy. Any of the polyamide-based, polyurea-based and polyphosphoramide-based polymers or polymer electrolytes described herein may be copolymerized with other polymers to form copolymers, block copolymers, or graft copolymers. Copolymerization may also affect the mechanical properties of some liquid polymers, allowing them to become solid polymer electrolytes. Any of these solid polymer electrolytes described herein may be used as an anolyte and/or a separator electrolyte in a battery cell.

### Examples

The following example provides details relating to synthesis of phosphorous-based polyesters in accordance with the present invention. It should be understood the following is representative only, and that the invention is not limited by the detail set forth in this example.

### N-Methylpolycaprolactam:

In an exemplary embodiment, N-methylpolycaprolactam has been synthesized in one step as follows.

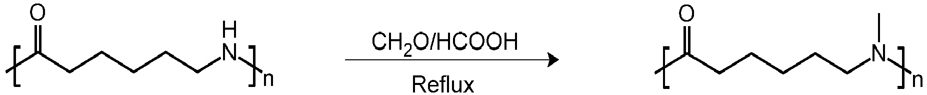

To the solution of polycaprolactam (Nylon-6) (3 g) (181110-Aldrich) in formic acid (120 mL) was added 120 mL of formalin (37%) in a round bottom flask fitted with reflux condenser. The solution was refluxed at 1100 C for 3 days. The reaction mixture was allowed to cool to room temperature and 50 ml of concentrated HCl was added. The excess Formic acid, formalin and HCl were removed under reduced pressure by rotary evaporator. The residue dissolved in water and filtered to remove paraformaldehyde by suction filtration. The filtrate was neutralized by aqueous NaOH and extracted with dichloromethane to obtain 3.1 g (-92% yield) of N-methylpolycaprolactam. 1H NMR (CDCl3): δ 3.24 - 3.07 (m, 2H), 2.87 (s, 3H), 2.35 - 2.17 (m, 2H), 1.79 - 1.46 (m, 4H), 1.44 - 1.22 (m, 2H).

### Poly Butyl N,N-dimethylurea:

In an exemplary embodiment, poly butyl N,N-dimethylurea has been synthesized as follows.

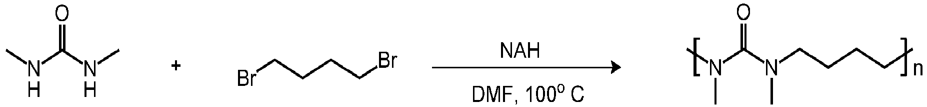

To a solution of NaH (1.2 g, 0.05 mol) in DMF (20 mL) was added dimethylurea (2 g, 0.023 mol) in DMF (10 mL) dropwise and stirred at 1000 C for 1 h. Reaction mixture was cooled to room temperature and 1,4-dibromobutane (4.9 g, 0.023 mol) was added drop wise. Reaction mixture was then stirred at 1000 C for 2 days. Excess NaH was quenched by adding MeOH. Most of the DMF was removed under high vacuum and the reaction mixture was dissolved in DCM and filtered. Most of the DCM was removed under vacuum and the product was precipitated from diethyl ether to obtain 2.5 g (-77.6 % yield) of poly butyl N,N-dimethylurea. 1H NMR (CDC13): δ 3.94 - 3.83 (m, 4H), 3.51 (s, 6H), 2.31 (m, 4H).

### Poly Hexyl Methyl-N,N'-Dimethyldiamidophosphate:

In an exemplary embodiment, poly hexyl methyl-N,N'-dimethyldiamidophosphate has been synthesized as follows.

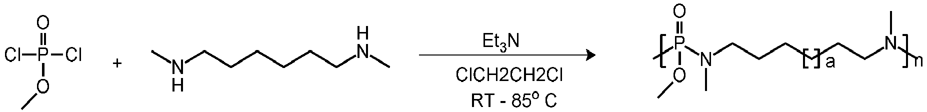

To the solution of N,N'-Dimethyl-1,6-hexanediamine (2.92 g, 0.02 mol) and Et¬¬3N (6 mL) in 1,2-dichloroethane (30 mL) at room temperature was added Methyl dichlorophosphate (3 g, 0.02 mol) dropwise under argon atmosphere. The reaction mixture was refluxed at 850 C for 24 h. Then the reaction was cooled to room temperature and the solvent was removed under high vacuum. The crude mixture was dissolved in 100 mL H2O and purified by dialysis using 10K MWCO dialysis membrane to get 3.5 g (79% yield) of poly hexyl methyl-N,N'-dimethyldiamidophosphate. 1H NMR (CDCl3): δ 3.65 - 3.57 (m, 3H), 3.00 - 2.85 (m, 4H), 2.74 - 2.53 (m, 6H), 1.61 - 1.45 (m, 4H), 1.37 - 1.23 (m, 4H).

### Poly Hexyl Tetramethylphosphoramide:

In an exemplary embodiment, poly hexyl tetramethylphosphoramide has been synthesized as follows.

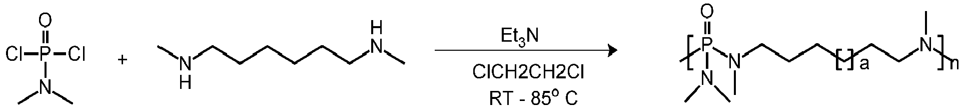

To the solution of N,N'-Dimethyl-1,6-hexanediamine (2.67 g, 0.018 mol) and Et¬¬3N (6 mL) in 1,2-dichloroethane (30 mL) at room temperature was added N,N-Dimethylphosphoramic dichloride (3 g, 0.018 mol) dropwise under argon atmosphere. The reaction mixture was refluxed at 850 C for 24 h. Then the reaction was cooled to room temperature and the solvent was removed under high vacuum. The crude mixture was dissolved in 100 mL H2O and purified by dialysis using 10K MWCO dialysis membrane to get 1.5 g (-35% yield) of poly hexyl tetramethylphosphoramide. 1H NMR (CDC13): δ 3.01 - 2.80 (m, 3H), 2.76 - 2.55 (m,12H), 1.65 - 1.44 (m, 4H), 1.38 - 1.18 (m, 4H).

This invention has been described herein in considerable detail to provide those skilled in the art with information relevant to apply the novel principles and to construct and use such specialized components as are required. However, it is to be understood that the invention can be carried out by different equipment, materials and devices, and that various modifications, both as to the equipment and operating procedures, can be accomplished without departing from the scope of the invention itself.

## Claims

1. A polymer, comprising:
a polymer structure described by: 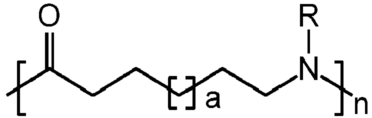 wherein:
each R is selected independently from the group consisting of alkyl and/or aryl substituents; and
a and n are integers, wherein a ranges from 1 to 10, and n ranges from 1 to 1000.

2. The polymer of Claim 1 further comprising an electrolyte salt, wherein the polymer is an electrolyte.

3. The polymer of Claim 2 further comprising ceramic electrolyte particles.

4. The polymer of Claim 1 wherein the polymer is crosslinked.

5. The polymer of Claim 4 further comprising an electrolyte salt, wherein the polymer is an electrolyte.

6. A polymer, comprising:
a polymer structure described by: 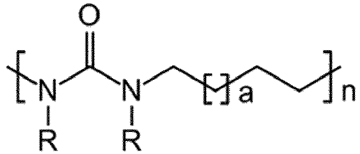 wherein:
each R is selected independently from the group consisting of alkyl and/or aryl substituents; and
a and n are integers, wherein a ranges from 1 to 10, and n ranges from 1 to 1000;

7. The polymer of Claim 6 further comprising an electrolyte salt, wherein the polymer is an electrolyte.

8. The polymer of Claim 7 further comprising ceramic electrolyte particles.

9. The polymer of Claim 6 wherein the polymer is crosslinked.

10. The polymer of Claim 9 further comprising an electrolyte salt, wherein the polymer is an electrolyte.

11. A polymer, comprising:
a polymer structure described by: 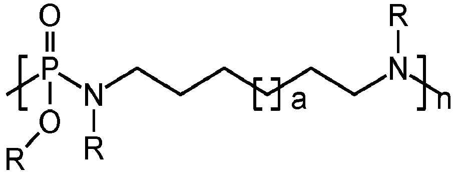 wherein:
each R is selected independently from the group consisting of alkyl and/or aryl substituents; and
a and n are integers, wherein a ranges from 1 to 10, and n ranges from 1 to 1000;

12. The polymer of Claim 11 further comprising an electrolyte salt, wherein the polymer is an electrolyte.

13. The polymer of Claim 12 further comprising ceramic electrolyte particles.

14. The polymer of Claim 11 wherein the polymer is crosslinked.

15. The polymer of Claim 14 further comprising an electrolyte salt, wherein the polymer is an electrolyte.

16. A polymer, comprising:
a polymer structure described by: 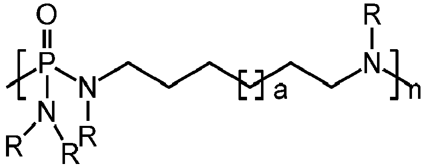 wherein:
each R is selected independently from the group consisting of alkyl and/or aryl substituents; and
a and n are integers, wherein a ranges from 1 to 10, and n ranges from 1 to 1000;

17. The polymer of Claim 16 further comprising an electrolyte salt, wherein the polymer is an electrolyte.

18. The polymer of Claim 17 further comprising ceramic electrolyte particles.

19. The polymer of Claim 16 wherein the polymer is crosslinked.

20. The polymer of Claim 19 further comprising an electrolyte salt, wherein the polymer is an electrolyte.

21. An electrochemical cell, comprising:
an anode configured to absorb and release lithium ions;
a cathode comprising cathode active material particles, an electronically-conductive additive, and a catholyte;
a current collector adjacent to an outside surface of the cathode; and
a separator region between the anode and the cathode, the separator region comprising the electrolyte according to Claim 7 or Claim 17, and the electrolyte salt is a lithium salt.

22. The electrochemical cell of Claim 21 wherein the separator region comprises two layers: an anolyte layer adjacent to the anode, the anolyte layer comprising an anolyte, and a separator electrolyte layer positioned between the anolyte layer and the cathode, the separator electrolyte layer comprising a separator electrolyte, wherein the anolyte comprises the electrolyte according to Claim 7 or Claim 17.

23. The electrochemical cell of Claim 22 wherein the separator electrolyte comprises a solid polymer electrolyte.

24. The electrochemical cell of Claim 22 wherein at least one of the anolyte and the separator electrolyte further comprises ceramic electrolyte particles.

25. The electrochemical cell of Claim 22 wherein at least one of the anolyte and the separator electrolyte is crosslinked.

26. The electrochemical cell of Claim 21 wherein the anode comprises a solid metal film made of a material selected from the group consisting of lithium metal and lithium alloys.

27. The electrochemical cell of Claim 21 wherein the anode comprises anode active material particles selected from the group consisting of lithium titanate, graphite, silicon, and combinations thereof, wherein the anode further comprises the electrolyte according to Claim 7 or Claim 17.
